(19) Europäisches Patentamt
European Patent Office
Office européen des brevets

(11) **EP 3 220 503 B1**

(12) **EUROPEAN PATENT SPECIFICATION**

(45) Date of publication and mention
of the grant of the patent:
**20.11.2019 Bulletin 2019/47**

(51) Int Cl.:
***H02J 3/18*** *(2006.01)*      ***H02J 3/22*** *(2006.01)*

(21) Application number: **16305278.0**

(22) Date of filing: **15.03.2016**

(54) **SHUNT COMPENSATION OF LONG HVAC CABLES**

NEBENSCHLUSSKOMPENSATION LANGER HLK-KABEL

COMPENSATION DE DÉRIVATION DE LONGS CÂBLES HVAC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2017 Bulletin 2017/38**

(73) Proprietor: **Nexans
92400 Courbevoie (FR)**

(72) Inventor: **HATLO, Marius
1671 Fredrikstad (NO)**

(74) Representative: **Allain, Laurent
Ipsilon
Le Centralis
63, avenue du Général Leclerc
92340 Bourg-la-Reine (FR)**

(56) References cited:
**GB-A- 2 258 940**      **US-A1- 2006 096 953**
**US-A1- 2015 008 766**

## Description

### Introduction

The invention relates to power cables, and more specifically to a cable assembly suited for subsea HVAC power transmission over long distances.

### Background and prior art

It is known that high voltage alternating current (HVAC) power transmission in cables over long distances generates reactive power resulting in reduced efficiency and possibly loss of power.

There are several known methods and systems for compensating for reactive power generation in subsea cables. One way is to place reactors at the seabed at required intervals along the cable. This solution is quite expensive and requires extensive maintenance. Another solution is provided with a cable design providing fixed capacitive compensation. Yet another is transmitting DC instead of AC resulting in reduced efficiency and increased costs.

A subsea reactor represents a large component on the seabed which has to be water tight. For long lengths several such units are required, introducing high risk and cost.

DC transmission is more expensive than normal AC transmission. Introducing complicated converters at each end of a cable is especially challenging in an offshore/subsea environment. Most of the existing power network is AC, making AC transmission more favourable in terms of connecting to existing power grids. US 5051685 describes a waveform correlator for three-phase power for adjusting transient and harmonics prior to transferring power in a cable.

US 2013033103 describes distributed impedance compensation devices placed at set intervals along a three-phase distribution cable.

US 4204129 describes constructional features of a capacitance compensated cable where the degree of compensation is fixed. The cable is suitable for transmission of HVAC with reduced power loss. This is achieved by having capacitance distributed along the length of the cable by dividing the conductor of the cable into two parts which are separated by dielectric material such that the two conductor parts are in capacitive relation along the length of the cable and by connecting one conductor part to a power generator and the other conductor part to the load such that the distributed capacitance is in series with the generator and load.

US 2015008766 describes a subsea HVAC cable assembly with distributed shunt inductances placed at regular intervals along the conductors.

US 2006096953 describes an HVAC cable assembly with distributed shunt inductors placed at regular intervals along the conductors.

Existing methods and cables use solutions that are expensive and not well suited for efficient cost effective HVAC power transmission.

There is therefore a need for an improved and cost effective method and cable assembly for subsea HVAC power transmission over long distances comprising means for overcoming reactive components generated in the cable.

The problem solved by present invention is a flexible and tuneable method and cable assembly for compensating for reactive power generation in HVAC subsea cables.

In the new solution according to the invention, the principle for compensating reactive power generated by a cable is different that prior art solutions. Induction is used instead of capacitance, resulting in different constructional features. According to the new solution, the conductor for transmitting power is continuous, i.e. not divided in two parts as in US4204129.

According to the invention, a specific power cable assembly, providing a high voltage tuneable inductance for HVAC cables, is provided. The specific assembly can be embedded inside the power phases of a HVAC cable, or connected to the cable as a shunt reactance for effectively compensating the reactive power generated by the power cable.

The shunt compensation of HVAC cable can eliminate the length limitation of submarine cables for HVAC power transmission. The solution can be compared to DC transmission where generation of reactive power is not a problem.

### Summary of the invention

There is a need for an improved and cost effective method and cable assembly for subsea HVAC power transmission over long distances comprising means for overcoming reactive components generated in the cable.

According to the present invention this is provided by a power cable assembly, for transferring high voltage alternating current over long distances, comprising continuous power cables where each power cable comprises a core with a conductor and cable insulation. The assembly further comprises shunt inductances connected to each conductor at regular intervals along each conductor.

Other features of the power cable assembly are defined in the claims.

The invention is further defined by a method for providing said power cable assembly. The method is defined by connecting shunt inductances to each conductor at regular intervals along each conductor. Further features of the method are defined in the claims.

**Brief description of the drawings**

The present invention will be described in further details with reference to the enclosed figures where:

Figure 1 is an equivalent circuit of a section of a transmission cable with per length impedance $Z$ and shunt capacitance C.

Figure 2 is a circuit representation of a section of the cable with per length impedance Z, shunt capacitance C and shunt inductance $L_s$.

Figure 3 is an illustration of shunt inductances embedded with power phases in a common cable.

Figure 4 is an illustration of separate shunt inductances and power cables.

Figure 5 is an illustration of one phase of a power cable with embedded shunt inductance.

**Detailed description of the invention**

The invention will in the following be described in detail with reference to the figures. Specific details are introduced to provide a thorough understanding of embodiments of the claimed power cable assembly and method for providing same. One skilled in the relevant art will however recognize that these embodiments can be practiced without one or more of the specific details, or with other components. In other instances, well known structures or operations are not shown or described in detail, to avoid obscuring aspects of the disclosed embodiments.

The technical problem to be solved is compensating for reactive power generated in HVAC cables over long distances.

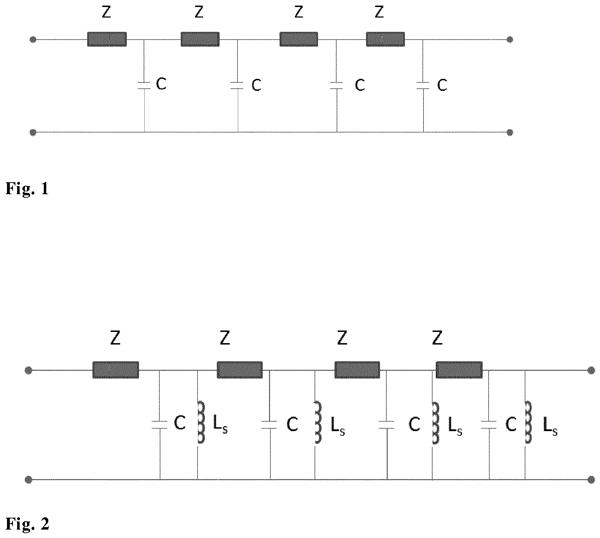

Figure 1 illustrates the problem with reactive power generated in a transmission cable. The figure shows an equivalent circuit representing a section of a cable with a per length impedance $Z=R+j\omega L$ and shunt capacitance $C$. The real part $R$ is the resistance and the imaginary part is the reactance denoted by the imaginary unit $j$, the angular frequency $\omega$ which is $2\pi f$, and the inductance $L$.

The voltage and current of such transmission line is described by the telegrapher's equations:

$$-\frac{dV(x)}{dx} = RI(x) + j\omega LI(x) \qquad [1]$$

$$-\frac{dI(x)}{dx} = j\omega CV(x) \qquad [2]$$

Equation [1] is a generalization of the commonly known Ohm's law, describing the voltage drop over a unit length of impedance carrying current $I(x)$.

Equation [2] describes how the current changes along the cable due to the cable shunt capacitance. The equation describes how the capacitance of the cable generates current and reactive power in the cable. This reactive current increases with length, and is the main reason why HVAC cables are unsuited for being used for transmitting power over long distances.

Figure 2 shows one way of compensating capacitive current by adding a shunt inductance. With shunt inductance included, equation [2] becomes:

$$-\frac{dI(x)}{dx} = j\omega CV(x) + \frac{V(x)}{j\omega L_s} \qquad [3]$$

If the shunt inductance is chosen such that:

$$-\frac{dI(x)}{dx} = j\omega C + \frac{1}{j\omega L_S} = 0 \quad \rightarrow \quad \omega^2 L_S C = 1 \qquad [4]$$

the current will not change along the cable route. This means that AC transmission may be used for much longer cable lengths than lengths handled by current technology. At the power frequency a cable will behave as series impedance *Z*. For long HVAC cables, such as the Malta Sicily inter-connector, shunt inductances/reactors are typically located at each end for controlling reactive power and voltage.

Cable capacitance can however be compensated for the by connecting shunt inductance to the HV conductor at regular intervals, for example at each factory joint, approximately each *10 km,* or at longer intervals *50 - 100 km,* depending on voltage level, length, cost, etc. This enables transmission of AC power over much longer distances that is available today, i.e. *> 200 km.*

According to the present invention, the reactive power generated components are compensated for by introducing inductive components in a cable assembly. A high voltage tuneable inductance is introduced. This is connected to a HVAC cable as a shunt reactance for effectively compensating for the reactive power generated by the cable.

The per phase capacitance of submarine HVAC cables is typically around *0.2 μF/km* for, which means that the shunt inductance needed at *50 Hz* is approximately $L_s$= *50H.* The inductance of the shunt coil is:

$$L = \frac{N^2 \mu \pi r^2}{l} \qquad [5]$$

where *r* is the radius of the coil, $\mu$ is the effective permeability of the core, *N* is the number of turns, and *l* is the length of the coil. The core can be air (or other non-magnetic material), a paramagnetic metal (ferrite, armour steel etc.), or a paramagnetic plastic (e.g. magnetized polyethylene). The magnetic field in the coil is then:

$$B = n\mu \, I_S \qquad [6]$$

where $I_s$ is the current flowing in the coil wire, and *n=N/l* is the number of turns per meter. The inductance equation is valid when the magnetic field is below the saturation limit of the material, typically 1-2 T for paramagnetic materials (no limit for non-magnetic materials).

According to the present invention a continuous power cable assembly transferring HVAC over long distances is provided by connecting inductances to each conductor at regular intervals along the conductors.

In one embodiment, the shunt inductances are embedded in the power cable assembly within a common cable.

In another embodiment, the shunt inductances are provided as a separate shunt cable arranged along the power cables.

In yet another embodiment of the invention, the shunt inductances are embedded within at least one of the continuous power cables.

Which of the above mentioned embodiments to choose, i.e. a separate or an embedded shunt inductance, will depend on dimensions, voltage level, total length and manufacturing method of a cable designed for a specific use.

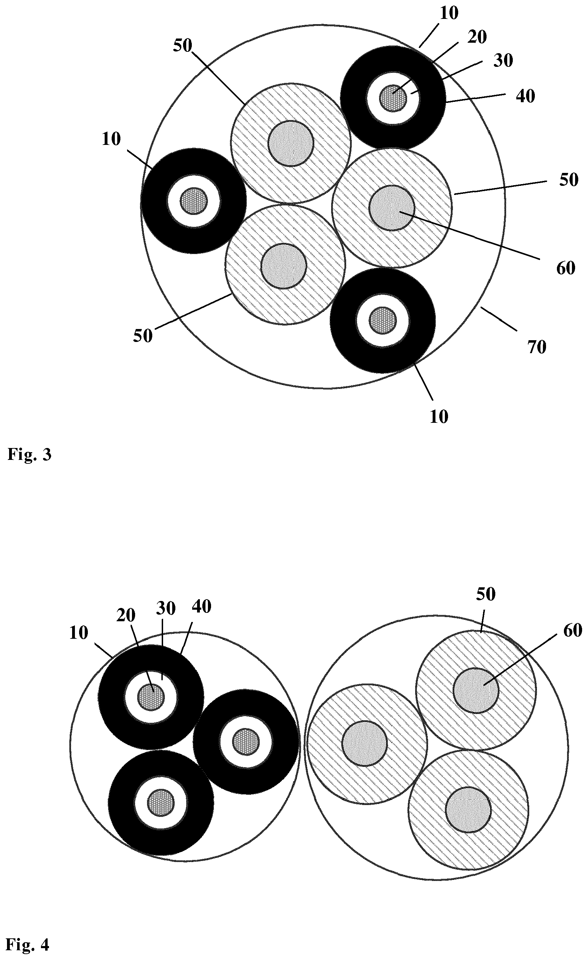

Figure 3 is an illustration of a power cable assembly according to the invention where shunt inductances 50 are embedded within the same common cable 70 as the power cables 10 transferring the different phases of AC power. The figure shows cross sections of three power cables 10, one for each phase in a three phase power system, as well as three corresponding shunt inductances 50 where each shunt inductance 50 is connected to one power phase of the conductors 30. Each power cable 10 comprises a core 20, a conductor 30 and cable isolation 40.

Each shunt inductance 50 is connected to a conductor 30 at regular intervals in order to compensate for the reactive power generated over long distances. In a typical embodiment, the connection is made by T- joints which are known in the art. The T- joint connection of the shunt inductance 50 and a conductor 30 can be performed in a factory controlled environment. The distance between each connection will depend on the specific purpose a cable is to be used for. Typical intervals may be from 10km to 100km between each connection.

Figure 4 is an illustration of another embodiment of a power cable assembly according to the invention. Separate shunt inductances 50 and their shunt inductance cores 60 are arranged alongside separate power cables 10, and each shunt inductance 50 is connected to a conductor 30 at regular intervals along the conductors 30.

In the embodiments illustrated in figure 1 and 2, the core 20 of the power cable 10 will typically be integrated as a part of the conductor 30.

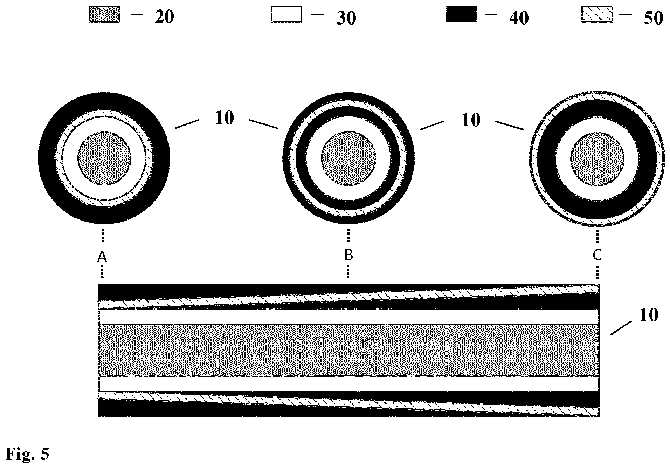

Figure 5 shows another embodiment of the invention where a shunt inductance 50 is embedded in a power cable 10. In this way the shunt inductance 50 and the conductor 30 will be integrated in one cable for each phase.

In this embodiment, the core 20 of the conductor 30 is made of a non-magnetic material, a paramagnetic material or a paramagnetic plastic.

When the shunt inductance 50 is embedded within at least one of the continuous power cables 10, the shunt inductance 50 is connected between the conductor 30 at point A it figure 5, and the insulation 40 at point B. These connections are made at regular intervals along the power cable 10.

This construction will thus not require a T- joint. It will however result in slightly larger power phases due to the added thickness of the shunt coil, and the paramagnetic core 20 in the middle of the conductor 30.

Figure 5 shows three different cross sections A, B and C of a power cable 10 with embedded shunt inductance 50. The length of the illustrated power cable 10 may in one embodiment be 10km, i.e. the distance between the indicated points A and C. As indicated by the different cross sections, the core 20 and the conductor 30 have the same position relative to the centre of the cable while the shunt inductance 50 will have a varying position from point A to C throughout the cable insulation 40. In this way, the shunt inductance 50 is connected to the conductor 30 at point A, and outer part of the insulation 40 at point C, thus providing an efficient shunt inductance, ref. $L_s$ in figure 2.

The shunt inductance 50 described in all embodiments above can be constructed as a coil with N turns around a core. For the embodiments of the shunt inductance 50 described above with reference to Figures 3 and 4, the core for the inductance is provided as a shunt inductance core 60 in the separate shunt cable. For the embodiment described with reference to figure 5, the core for the inductance is the core 20 comprised in a power cable 10.

The current carrying wire of the shunt inductance 50 is coiled around the core with predefined turns per meter, such that the total inductance is of a desired magnitude to compensate for the capacitance of the cable at the power frequency. The cross section of the coil wire must be chosen according to the reactive current flowing, which will depend on the voltage level and how often the inductive shunt is connected to the conductor. Care must be taken when designing the shunt inductances 50, such that the magnetic field is below saturation of the paramagnetic core, and that the losses per meter are kept low enough to prevent overheating of the cable insulation 40.

The present invention is also defined by a method for providing a power cable assembly for transferring high voltage alternating current over long distances by means of continuous power cables 10 where each power cable 10 comprises a core 20, a conductor 30 and cable insulation 40. The method is characterized in connecting shunt inductances 50 to each conductor 30 at regular intervals along the conductors 30.

One way of performing the method is to embed separate shunt inductances 50 in the power cable assembly. Another way is to arrange a separate shunt cable alongside the power cables 10. One way of connecting the shunt inductances 50 to the conductors 30 is to do it by means of T- joints.

Yet another is to embed shunt inductances 50 within at least one of the continuous power cable 10. The shunt inductances 50 can be embedded by connecting the shunt inductance 50 between the conductor 30 and the cable insulation 40 at regular intervals along the power cable 10.

The following example shows the parameters needed for one *52 kV* cable with separate shunt phases and one *245 kV* cable with embedded shunt inductance, both example with *C=0.2 μF/km,* magnetic core with radius *10 mm* and saturation of *2T,* and relative permeability of about *250*. The remaining parameters are chosen to minimize the losses without having more turns of coil wire per meter than possible for a given cross section of the wire. This example shows that the losses per *100 km* cable increases with increasing voltage, however, in percent of total transmitted power the shunt losses are fairly small (*<1 % per 100 km)*. For both cables cross section of the wire can be chosen much smaller to reduce cost, with the result of higher losses. It is also worth noting that for the *52 kV* cable the length of the shunt cable is much smaller than the total cable length, which will result in a fairly small material cost increase. With *52 kV* cable with *400 mm² Cu* conductor, it is possible to transmit *20 MW* at a length of *250 km* with a total loss of *10 %* (*18 MW* load).

For higher loads the voltage should be increased to keep the losses below *10 %*. For example electrification of Johan Sverdrup *100 MW 200 km,* could be feasible with three phase AC *100 kV 630 mm²* with 7 *km* shunt cable every *50 km,* with about *7%* total transmission losses.

The table below shows an examples of parameters for one *52 kV* cable and one *245 kV* cable.

|  | 52 kV | 245 kV |
|---|---|---|
| Turns per meter | 67 | 72 |
| Length of shunt [km] | 2 km shunt per 50 km cable | 10 km shunt per 10 km cable (embedded) |
| Loss per 100 km | 0.1 MW | 2.8 MW |
| Wire cross section | 100 mm² Cu | 150 mm² Cu |

According to the present invention there is no need for subsea reactor or AC to DC converter limiting current HVAC transmission over long distances.

The new and inventive cable assembly is ideal for electrification of offshore installations far from shore, i.e. >100 km. Examples of such installations are oil platforms and power transmission to subsea installations such as pumps, compressors, motors, etc.

## Claims

1. A power cable assembly for transferring high voltage alternating current over long distances, comprising a plurality of power cables (10) where each power cable (10) comprises a core (20), a conductor (30) and a cable insulation (40), the power cable assembly further comprising shunt inductances (50) connected to each conductor (30) at regular intervals along the conductors (30), **characterised in that** the cables are continuous.

2. The power cable assembly according to claim 1, where the shunt inductances (50) are provided as separate cables embedded in the power cable assembly as a common cable (70).

3. The power cable assembly according to claim 1, where the shunt inductances (50) are provided as separate cables arranged alongside the power cables (10).

4. The power cable assembly according to any of the previous claims, where the shunt inductances (50) are connected to the conductors (30) by means of T- joints.

5. The power cable assembly according to any of the previous claims, where the core (20) is a part of the conductor (30).

6. The power cable assembly according to claim 1, where the shunt inductances (50) are embedded within at least one of the continuous power cables (10).

7. The power cable assembly according to claim 6, where the embedded shunt inductance (50) is connected between the conductor (30) and the insulation (40) at regular intervals along the power cable (10).

8. The power cable assembly according to claim 6 or 7, where the core (20) is made of a non-magnetic material, a paramagnetic material or a paramagnetic plastic.

9. The power cable assembly according to any of the previous claims, where the shunt inductance (50) is connected to the power conductors (10) at regular intervals of 10 to 100km.

10. The power cable assembly according to any of the previous claims, where the shunt inductance (50) is constructed as a coil with N turns around a core.

11. A method for providing a power cable assembly for transferring high voltage alternating current over long distances by means of a plurality of power cables (10) where each power cable (10) comprises a core (20), a conductor (30) and cable insulation (40), by connecting shunt inductances (50) to each conductor (30) at regular intervals along the conductors (30), **characterised in that** the cables (10) are continuous.

12. The method according to claim 11, by embedding the shunt inductances (50) in the power cable assembly.

13. The method according to claim 11, by arranging a separate shunt cable alongside the power cables (10).

14. The method according to claim 11, by embedding shunt inductances (50) within at least one of the continuous power cables (10).

15. The method according to any of the claims 11 to 13, by connecting the shunt inductances (50) to the conductors (30) by means of T- joints.

16. The method according to claim 14, by connecting the embedded shunt inductance (50) between the conductor (30) and the cable insulation (40) at regular intervals along the power cable (10).

**EP 3 220 503 B1**

**Patentansprüche**

1. Netzkabeleinheit zur Übertragung von Hochspannungs-Wechselstrom über lange Distanzen, umfassend eine Vielzahl von Netzkabeln (10), wobei jedes Netzkabel (10) einen Kern (20), einen Leiter (30) und eine Kabelisolierung (40) umfasst, wobei die Netzkabeleinheit weiter Nebenschluss-Induktanzen (50) umfasst, die mit jedem Leiter (30) in regelmäßigen Intervallen entlang der Leiter (30) verbunden ist, **dadurch gekennzeichnet, dass** die Kabel kontinuierlich sind.

2. Netzkabeleinheit nach Anspruch 1, wobei die Nebenschluss-Induktanzen (50) als getrennte Kabel bereitgestellt sind, die in der Netzkabeleinheit als ein gemeinsames Kabel (70) eingebettet sind.

3. Netzkabeleinheit nach Anspruch 1, wobei die Nebenschluss-Induktanzen (50) als getrennte Kabel bereitgestellt sind, die entlang der Netzkabel (10) angeordnet sind.

4. Netzkabeleinheit nach einem der vorhergehenden Ansprüche, wobei die Nebenschluss-Induktanzen (50) mit den Leitern (30) mit Hilfe von T-Stücken verbunden sind.

5. Netzkabeleinheit nach einem der vorhergehenden Ansprüche, wobei der Kern (20) Teil des Leiters (30) ist.

6. Netzkabeleinheit nach Anspruch 1, wobei die Nebenschluss-Induktanzen (50) innerhalb mindestens eines der kontinuierlichen Netzkabel (10) eingebettet sind.

7. Netzkabeleinheit nach Anspruch 6, wobei die eingebettete Nebenschluss-Induktanz (50) zwischen dem Leiter (30) und der Isolierung (40) in regelmäßigen Intervallen entlang des Netzkabels (10) verbunden ist.

8. Netzkabeleinheit nach Anspruch 6 oder 7, wobei der Kern (20) aus einem nicht magnetischem Material, einem paramagnetischen Material oder einem paramagnetischen Plastik hergestellt ist.

9. Netzkabeleinheit nach einem der vorhergehenden Ansprüche, wobei die Nebenschluss-Induktanz (50) mit den Netzleitern (10) in regelmäßigen Intervallen von 10 bis 100 km verbunden ist.

10. Netzkabeleinheit nach einem der vorhergehenden Ansprüche, wobei die Nebenschluss-Induktanz (50) als eine Spule mit N Windungen um einen Kerns konstruiert ist.

11. Verfahren zum Bereitstellen einer Netzkabeleinheit zur Übertragung von Hochspannungs-Wechselstrom über lange Distanzen mit Hilfe einer Vielzahl von Netzkabeln (10), wobei jedes Netzkabel (10) einen Kern (20), einen Leiter (30) und eine Kabelisolierung (40) umfasst, durch Verbinden von Nebenschluss-Induktanzen (50) mit jedem Leiter (30) in regelmäßigen Intervallen entlang der Leiter (3), **dadurch gekennzeichnet, dass** die Kabel (10) kontinuierlich sind.

12. Verfahren nach Anspruch 11 durch Einbetten der Nebenschluss-Induktanzen (50) in die Netzkabeleinheit.

13. Verfahren nach Anspruch 11 durch Anordnen eines getrennten Nebenschlusskabels entlang der Netzkabel (10).

14. Verfahren nach Anspruch 11 durch Einbetten von Nebenschluss-Induktanzen (50) innerhalb mindestens eines der kontinuierlichen Netzkabel (10).

15. Verfahren nach einem der Ansprüche 11 bis 13, durch Verbinden ser Nebenschluss-Induktanzen (50) mit den Leitern (30) mit Hilfe von T-Stücken.

16. Verfahren nach Anspruch 14 durch Verbinden der eingebetteten Nebenschluss-Induktanz (50) zwischen dem Leiter (30) und der Kabelisolierung (40) in regelmäßigen Intervallen entlang des Netzkabels (10).

**Revendications**

1. Ensemble de câbles de puissance pour transférer un courant alternatif haute tension sur de longues distances, comprenant une pluralité de câbles de puissance (10) où chaque câble de puissance (10) comprend une âme (20), un conducteur (30) et un isolant de câble (40), l'ensemble de câbles de puissance comprenant en outre des inductances de dérivation (50) connectées à chaque conducteur (30) à des intervalles réguliers le long des conducteurs, (30), **caractérisé en ce que** les câbles sont continus.

2. Ensemble de câbles de puissance selon la revendication 1, où les inductances de dérivation (50) sont prévues en tant que câbles séparés intégrés dans l'ensemble de câbles de puissance en tant que câble commun (70).

3. Ensemble de câbles de puissance selon la revendication 1, où les inductances de dérivation (50) sont prévues en tant que câbles séparés agencés le long des câbles de puissance (10).

4. Ensemble de câbles de puissance selon l'une quelconque des revendications précédentes, où les inductances de dérivation (50) sont connectées aux conducteurs (30) au moyen de raccords en T.

5. Ensemble de câbles de puissance selon l'une quelconque des revendications précédentes, où l'âme (20) est une partie du conducteur (30).

6. Ensemble de câbles de puissance selon la revendication 1, où les inductances de dérivation (50) sont intégrées dans au moins l'un des câbles de puissance (10) continus.

7. Ensemble de câbles de puissance selon la revendication 6, où l'inductance de dérivation (50) intégrée est connectée entre le conducteur (30) et l'isolant (40) à des intervalles réguliers le long du câble de puissance (10).

8. Ensemble de câbles de puissance selon la revendication 6 ou 7, où l'âme (20) est constituée d'un matériau non magnétique, d'un matériau paramagnétique ou d'une matière plastique paramagnétique.

9. Ensemble de câbles de puissance selon l'une quelconque des revendications précédentes, où l'inductance de dérivation (50) est connectée aux conducteurs de puissance (10) à des intervalles réguliers de 10 à 100 km.

10. Ensemble de câbles de puissance selon l'une quelconque des revendications précédentes, où l'inductance de dérivation (50) est construite en tant que bobine avec N tours autour d'une âme.

11. Procédé pour réaliser un ensemble de câbles de puissance pour transférer un courant alternatif haute tension sur de longues distances au moyen d'une pluralité de câbles de puissance (10) où chaque câble de puissance (10) comprend une âme (20), un conducteur (30) et un isolant de câble (40), en connectant des inductances de dérivation (50) à chaque conducteur (30) à des intervalles réguliers le long des conducteurs, (30), **caractérisé en ce que** les câbles (10) sont continus.

12. Procédé selon la revendication 11, en intégrant les inductances de dérivation (50) dans l'ensemble de câbles de puissance.

13. Procédé selon la revendication 11, en agençant un câble de dérivation séparé le long des câbles de puissance (10).

14. Procédé selon la revendication 11, en intégrant des inductances de dérivation (50) dans au moins l'un des câbles de puissance (10) continus.

15. Procédé selon l'une quelconque des revendications 11 à 13, en connectant les inductances de dérivation (50) aux conducteurs (30) au moyen de raccords en T.

16. Procédé selon la revendication 14, en connectant l'inductance de dérivation (50) intégrée entre le conducteur (30) et l'isolant de câble (40) à des intervalles réguliers le long du câble de puissance (10).

Fig. 1

Fig. 2

Fig. 3

Fig. 4

Fig. 5

## REFERENCES CITED IN THE DESCRIPTION

**Patent documents cited in the description**

- US 5051685 A
- US 2013033103 A
- US 4204129 A
- US 2015008766 A
- US 2006096953 A